# EUROPEAN PATENT APPLICATION

(11) **EP 3 001 706 A1**
(43) Date of publication of application: **30.03.2016**
(21) Application number: 14290290.7
(22) Date of filing: 26.09.2014
(51) Int. Cl.: H04W 4/04, H04W 4/00

(54) **A small cell base station, a vehicle braking circuit, and method of using a small cell base station near a crossing**

(71) Applicant: ALCATEL LUCENT, 92100 Boulogne-Billancourt (FR)
(72) Inventor: Brend, Graham R., Westlea, Swindon SN5 7DJ (GB); Jordan, Ian, Westlea, Swindon SN5 7DJ (GB); Puddle, Nicola, Wiltshire, Swindon SN4 0ND (GB)
(74) Representative: Sarup, David Alexander

(57) **Abstract**

A small cell base station is provided comprising a receiver and a message generator, and a transmitter, the small cell base station being configured for use near a crossing between one of a railway, road and footpath and another of a railway, road and footpath, in which: the receiver is configured to receive information regarding which of at least one of a railway vehicle, road vehicle and pedestrian has right of way at the crossing, the message generator is configured to generate a message indicating which of said at least one of a railway vehicle, road vehicle and pedestrian has right of way, the transmitter is configured to transmit the message by wireless transmission towards at least one of said at least one of a railway vehicle, road vehicle and pedestrian, upon the said at least one of a railway vehicle, road vehicle and pedestrian entering the small cell radio coverage area.

## Description

### Field of the Invention

The present invention relates to telecommunications, in particular to wireless telecommunications.

### Description of the Related Art

Wireless telecommunications systems are well-known. Many such systems are cellular, in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells. Cells that are smaller than macrocells are sometimes referred to as small cells, microcells, picocells, or femtocells, but we use the term femtocells generically for cells that are smaller than macrocells. The femtocell base station is of a relatively low transmit power and hence each femtocell is of a small coverage area compared to a macrocell. A typical coverage range is tens of metres.

Systems are known in which road-side femtocell base stations are used together with vehicle mounted machine type communication (MTC) devices to allow a vehicle to be stopped automatically, for example if the vehicle is being driven in the wrong direction contrary to the correct direction of traffic flow, or if police require the vehicle to be halted.

Road safety and accident prevention on roads are major areas of concern. For example, accidents and incidents often occur at pedestrian crossings. Even when there are traffic control/ warning signals, for example lights and sound emitters, which improve safety at the crossings, accidents can still occur.

Accidents and incidents at railway crossings are also an issue. For example typically 25 to 30 people per year are killed at railway crossings in the British Isles each year.

Traffic signals and barriers are known to be used to control when and how vehicles cross pedestrian- and railway- crossings.

### Summary

The reader is referred to the appended independent claims. Some preferred features are laid out in the dependent claims.

An example of the present invention is a small cell base station comprising a receiver, a message generator, and a transmitter; the small cell base station being configured for use near a crossing between one of a railway, road and footpath and another of a railway, road and footpath, by:
the receiver being configured to receive information regarding which of at least one of a railway vehicle, road vehicle and pedestrian has right of way at the crossing;
the message generator being configured to generate a message indicating which of said at least one of a railway vehicle, road vehicle and pedestrian has right of way;
the transmitter being configured to transmit the message by wireless transmission towards at least one of said at least one of a railway vehicle, road vehicle and pedestrian, upon the said at least one of a railway vehicle, road vehicle and pedestrian entering the small cell radio coverage area.

Some embodiments provide a way of preventing vehicles being driven through a pedestrian or railway crossing either erroneously or deliberately. Some embodiments allow the control of vehicular movement to be linked to the current state of the pedestrian crossing and/or railway crossing.

Some embodiments involve a femtocell base station deployed at a crossing linked to a system that controls the crossing. The femtocell base station includes a controller which determines the current state of the crossing, for example whether the lights are red or green, or whether a barrier is or is not deployed, and provides an indication of that state to MTC devices located in vehicles in the vicinity of the femtocell base station. These embodiments involve a respective MTC device being installed in each vehicle so as to enable the controller in the femtocell base station to control movement of the respective vehicle, for example by the MTC device being connected to the vehicle's braking system.

Some embodiments make use of the fact that small cell base stations inherently provide a small cell, in other words a small area of wireless communications coverage, so enable use in the immediate coverage area of the small cell base station, namely at the pedestrian/railway crossing.

Preferably the small cell base station is for use at a crossing where a road crosses a footpath, the information comprises crossing traffic signal information, and the message comprises a warning that the pedestrian has right of way or an instruction for the road vehicle to stop Preferably the small cell base station is for use at a crossing where a road crosses a footpath, the information comprises crossing traffic signal information, and the message comprises a warning that the pedestrian does not have right of way.

Alternatively, preferably the small cell base station is for use at a crossing where a railway crosses at least one of a road and a footpath, and the message includes information from a railway signalling network. Preferably the message includes information as to the time remaining until the next train approaches the crossing.

Preferably a crossing is provided comprising the small cell base station.

Some examples of the present invention also relate to corresponding methods. For example a method is provided of using a small cell base station near a crossing between one of a railway, road and footpath and another of a railway, road or footpath, the method comprising:
receiving information regarding which of at least one of a railway vehicle, road vehicle and pedestrian has right of way at the crossing,
generating a message indicating which of said at least one of a railway vehicle, road vehicle and pedestrian has right of way.
transmitting the message by wireless transmission towards at least one of said at least one of a railway vehicle, road vehicle and pedestrian, upon the said at least one of a railway vehicle, road vehicle and pedestrian entering the small cell radio coverage area,
the message being received and decoded by at least one terminal within the small cell area for use in guiding or controlling traffic.

Preferably the at least one terminal comprises a machine type communication, MTC, device which is mounted in the road vehicle, the vehicle having brakes which are selectably automatically applied dependent upon the received and decoded message indicating that a pedestrian or an approaching railway vehicle has right of way. Preferably, a driver of the road vehicle selectably enables or disables the automatic braking.

Preferably, the at least one terminal comprises a user terminal carried by the pedestrian, the user terminal being configured to provide alerts to the pedestrian as to whether or not it is safe to now cross.

Another example of the present invention relates to a vehicle braking circuit comprising a machine type communication, MTC, device, a detector, a brake controller and a brake, the MTC device being configured to receive over air a wireless signal indicating that the vehicle should stop,
the detector being configured to detect the indication to stop and to inform a brake controller of the indication,
the brake controller being configured to apply the brake automatically dependent upon being informed of the indication.

Preferably, the vehicle braking circuit comprises a driver input which enables temporary disablement by the driver of automatic braking.

Preferably, the MTC device is configured to transmit a reply towards the small cell base,station indicating that the disablement of automatic braking by driver input has been made.

Another example provides a vehicle comprising the vehicle braking circuit.

### Brief Description_of the Drawings

Embodiments of the present invention will now be described by way of example and with reference to the drawings, in which:
Figure 1 is a diagram illustrating a network according to a first embodiment of the invention,
Figure 2 is a diagram illustrating the crossing controller of the network shown in Figure 1,
Figure 3 is a diagram illustrating the machine type communication (MTC) device of the vehicle of the network shown in Figure 1,
Figure 4 is a diagram illustrating the user terminal carried by the pedestrian shown in Figure 1,
Figure 5 is a flow chart illustrating operation of the crossing controller shown in Figure 2,
Figure 6 is a flow chart illustrating operation of the vehicle shown in Figure 1,
Figure 7 is a flow chart illustrating operation of the user terminal (User Equipment, UE) of the network shown in Figure 1,
Figure 8 is a diagram illustrating a network according to a second embodiment of the invention,
Figure 9 is a diagram illustrating the crossing controller of the network shown in Figure 8,
Figure 10 is a diagram illustrating the machine type communication (MTC) device of the vehicle of the network shown in Figure 8,
Figure 11 is a diagram illustrating a network according to a further embodiment of the invention, and
Figure 12 is a diagram illustrating the crossing controller of the network shown in Figure 11.

### Detailed Description

The inventors realised that road and rail accidents and incidents are often caused by drivers of vehicles not obeying traffic signals deployed at the crossings, for example not stopping at red lights or deliberately driving around barriers that have been lowered.

The inventors also realised that some pedestrian crossings use a tone to indicate to partially-sighted pedestrians that they may cross, but do not have a mechanism to indicate positively to such person that they are no longer allowed to cross, for example when a pedestrian crossing light is red.

The inventors found a way to help reduce the number of these accidents and incidents at these crossings by including an automated system that reduces the chances of crossing signals being ignored or not noticed by drivers of vehicles.

More specifically, when considering the known system involving traffic signals and barriers, the inventors realised that drivers of vehicles might not notice or deliberately ignore signals or barriers, for example swerving under a descending barrier, or not responding promptly to a warning stop light.

The inventors realised that one way to introduce an automated system for deployment at crossings would be to utilise a wireless network that is local to a specific crossing.

The inventors also realised that although the vast majority of vehicles have a driver in control, there is some interest in deploying driverless vehicles. They realised that if such vehicles were to ever to be allowed to use the conventional road network, appropriate automatic control of such vehicles would be needed when approaching pedestrian and rail crossings.

### Road Crossing Example

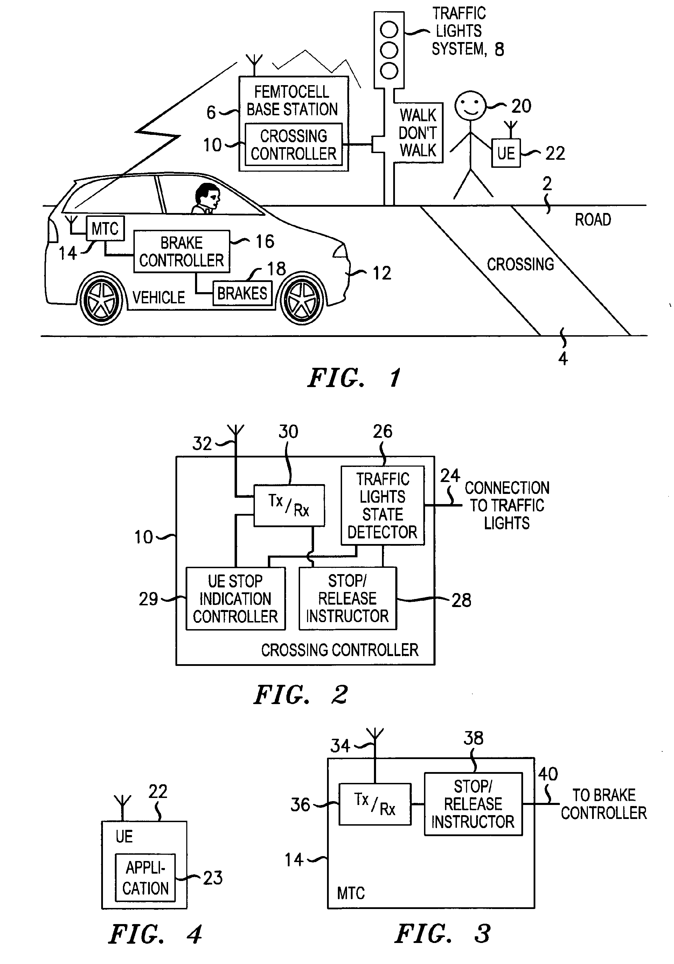

As shown in Figure 1, a road 2 has a pedestrian crossing 4. A femtocell base station 6 is provided at the crossing 4. The femtocell base station 6 is connected to the traffic lights system 8. The femtocell base station 6 includes a vehicle crossing controller 10.

Vehicles 12, one of which is shown in Figure 1, each include a machine type communication, MTC, device 14 connected via a brake controller 16 to the braking system 18.

In this example, pedestrians wishing to cross each carry a mobile user terminal. One pedestrian 20 carrying one mobile user terminal 22 is shown in Figure 1 for simplicity. In this example, the pedestrian may be blind or partially-sighted.

As shown in Figure 2, the vehicle crossing controller 10 includes a connection 24 to the traffic lights system 8, the connection 24 being to a traffic lights state detector 26 which is connected to a vehicle stop/release instructor circuit 28 and to a user terminal stop indication controller 29. The stop/release instructor circuit 28 and user terminal stop indication controller 29 are both connected via a transceiver 30 to an antenna 32.

As shown in Figure 3, the MTC device 14 in the vehicle 12 includes an antenna 34 connected to a transceiver circuit 36 which is connected to a stop/release instruction detector 38. The output 40 of the stop/release instruction detector 38 is connected to the brake controller 16.

As shown in Figure 4, the user terminal 22 runs an application 23 which is a crossing controller companion application as will be explained below.

### Operation

Operation of this example system will now be described first broadly then in more detail.

When the vehicle 12 approaches the crossing 4, the MTC device 14 automatically attaches wirelessly to the femtocell base station 6. Upon attaching, the vehicle crossing controller 10 provides the MTC device 14 with an indication of the current state of the crossing, for example whether the vehicle 12 has right of way (road traffic lights are green) or alternatively a pedestrian has right of way (road traffic lights are red or amber).

If the vehicle has right of way, one of the MTC device 14 and femtocell base station 6 releases the wireless attachment between the MTC device and femtocell base station, and the vehicle may proceed through the crossing. However, if it is determined that a pedestrian has right of way, the MTC device 14 receives an indication from the vehicle crossing controller 10 of the femtocell base station 6. The MTC device 14 then triggers the brake controller 16 to apply the brake system 18 so as to halt the vehicle before the crossing. Once any pedestrians have crossed safely, and the road traffic lights have turned green, the vehicle crossing controller 10 indicates to the MTC device 14 that the brakes can be released and the driver may proceed through the crossing. The MTC device 14 then triggers the brake controller 16 to release the brakes 18.

It will be appreciated that in certain circumstances the MTC device acts to automatically stop the vehicle. This provides extra protection over known approaches that rely on the driver correctly obeying visual signals in the form of traffic lights as to whether or not to proceed.

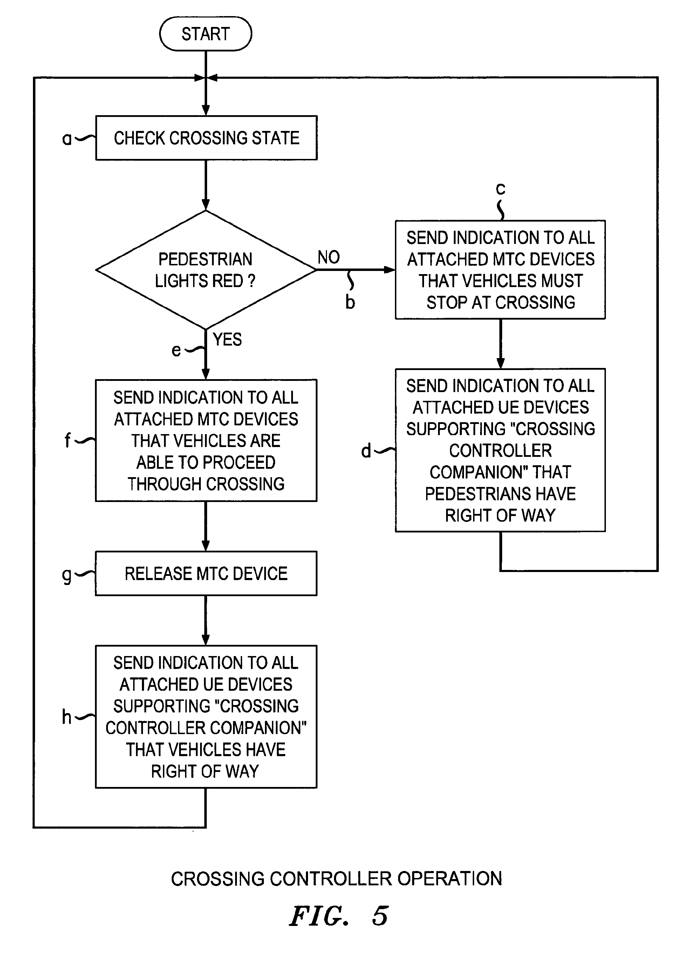

Operation is explained in some more detail as follows, referring to Figures 5 to 7.

### Crossing Controller

As shown in Figure 5, the crossing controller 10 checks (step a) the state of the crossing and upon determining (step b) that the pedestrian light is not red, sends (step c) a stop instruction to all attached MTC devices and also sends (step d) a walk indication to all attached user terminals.

Later upon the crossing controller determining (step e) that pedestrian light being turned red ('don't walk') and so the road traffic light green, the crossing controller then sends (step f) a further indication to the MTC devices to control (step g) the brake controller 16 to release the brakes 18 so the vehicle may proceed through the crossing 4. The crossing controller then sends (step h) a warning stop indication to all attached user terminals, namely of pedestrians, that the vehicles now have right of way.

### Vehicle

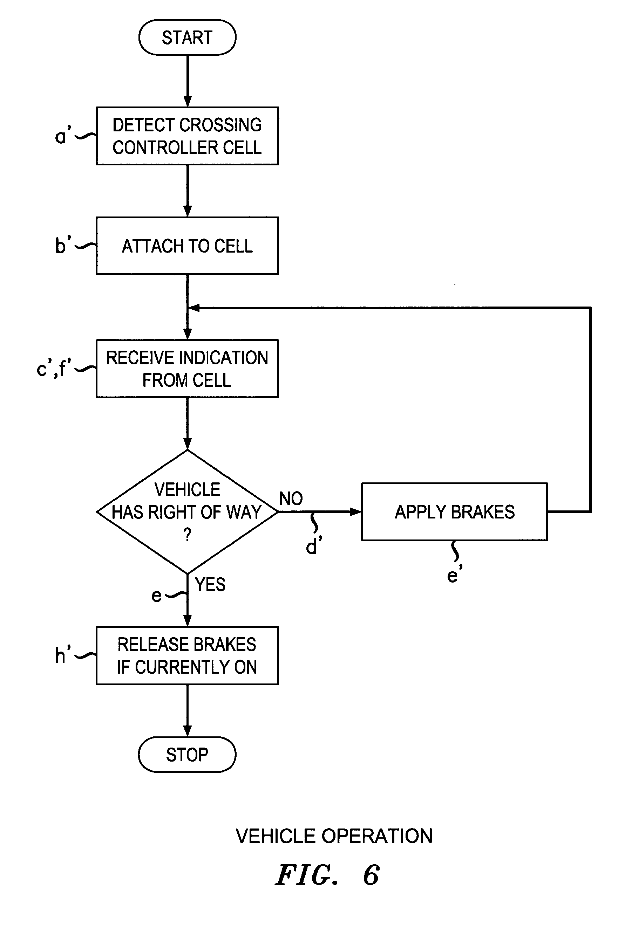

Referring to Figure 6, at the same time as the vehicle traffic lights turn red, the vehicle 12 approaches the crossing 4, so its MTC device 14 detects (step a') and attaches wirelessly (step b') to the femtocell base station 6. The stop instruction is received (step c') at the MTC device 14 from the crossing controller 10 indicating that the road traffic light is red and the pedestrian has right of way.

The MTC device 14 immediately controls (step d') the brake controller 16 to cause the brakes 18 to be applied (step c'). In consequence the vehicle automatically comes to a halt before the crossing 4.

After the pedestrian crosses, the pedestrian light is turned red and the road traffic light is turned green. The MTC device 14 then receives (step f) a further indication from the crossing controller 10 to control (step g') the brake controller 16 to release (step h') the brakes 18 so the vehicle may proceed through the crossing 4.

### Pedestrian

The partially-sighted pedestrian 20 approaches the crossing 4. The pedestrian has a mobile user terminal 22 of a type that runs Applications. The terminal 22 runs the crossing controller companion application 23.

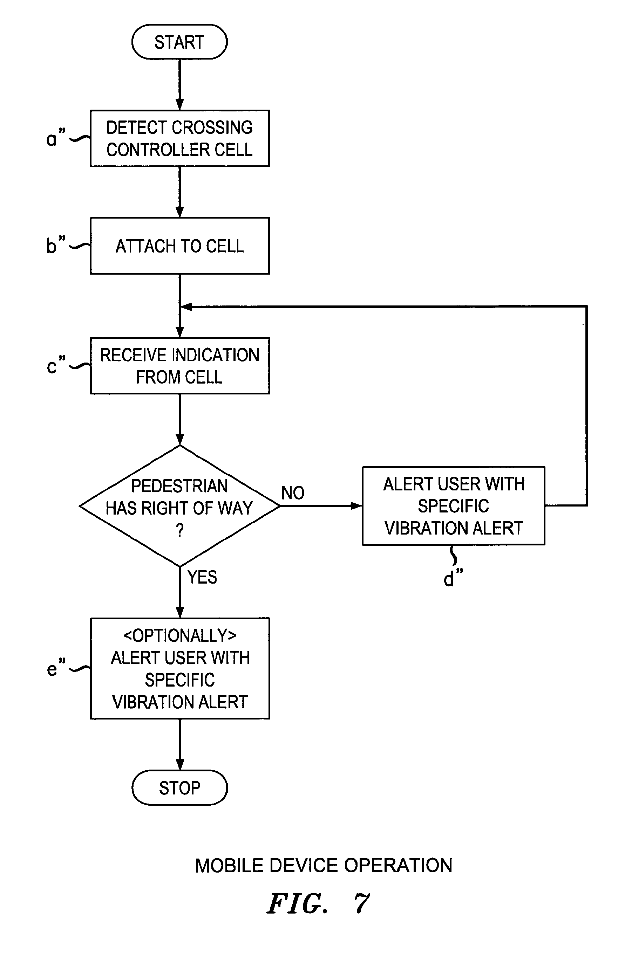

As shown in Figure 7, this Application causes the terminal 22 to detect (step a") and wirelessly attach (step b") to the femtocell base station 6 and so the vehicle crossing controller 10.

The application 23 receives (step c") wirelessly a stop indication from the crossing controller 10 because the pedestrian light is detected to be red, in other words, vehicles has right of way. In consequence the mobile terminal alerts (step d") the pedestrian, in this example by repeating a cycle of three periods of vibration, each period being of two seconds.

The pedestrian then reaches the crossing 4 and presses the control button (not shown) to indicate that the pedestrian wishes to cross.

A short while later, the pedestrian light is green and the road traffic light is red. The crossing then emits a series of tones so the partially-sighted pedestrian is aware that they may cross. In addition the crossing controller 10 of the femtocell base station 6 indicated to the Application 23 that the pedestrian may cross. The pedestrian is alerted (step e") via his user terminal of permission to cross, in this example, by a repeating cycle of periods of vibration of 1 second duration.

The 'don't walk' indication is particularly important as the partially-sighted pedestrian 20 approaches the crossing 4.

In this example, the crossing controller application 23 on the user terminal 22 also provides a indication to the pedestrian 20 of an unknown crossing state, in the event that the user terminal 22 attaches to the femtocell base station 6, but that connection is lost before the crossing controller 10 has indicated that the pedestrian may cross or the pedestrian may not cross. This indication is a default, being used when the user terminal 22 has recently provided an indication that the pedestrian may cross or an indication that the pedestrian may not cross, but the connection with the femtocell base station 6 is then lost.

It will be understood that the crossing controller 10 in the femtocell base station 6 aids the partially-sighted pedestrian by automatically providing an indication to his user terminal 22, for example a mobile phone, informing him when he may or may not cross at the crossing. In other words, the pedestrian 20 is informed via his user terminal 22 as to whether the pedestrian crossing lights are red (meaning stop, 'don't walk') or green (meaning walk). This is done by causing the user terminal 22 to clearly indicate, for example by a predefined set of vibration periods, the current state of the crossing to the pedestrian.

### Road Crossing Example with Driver Override

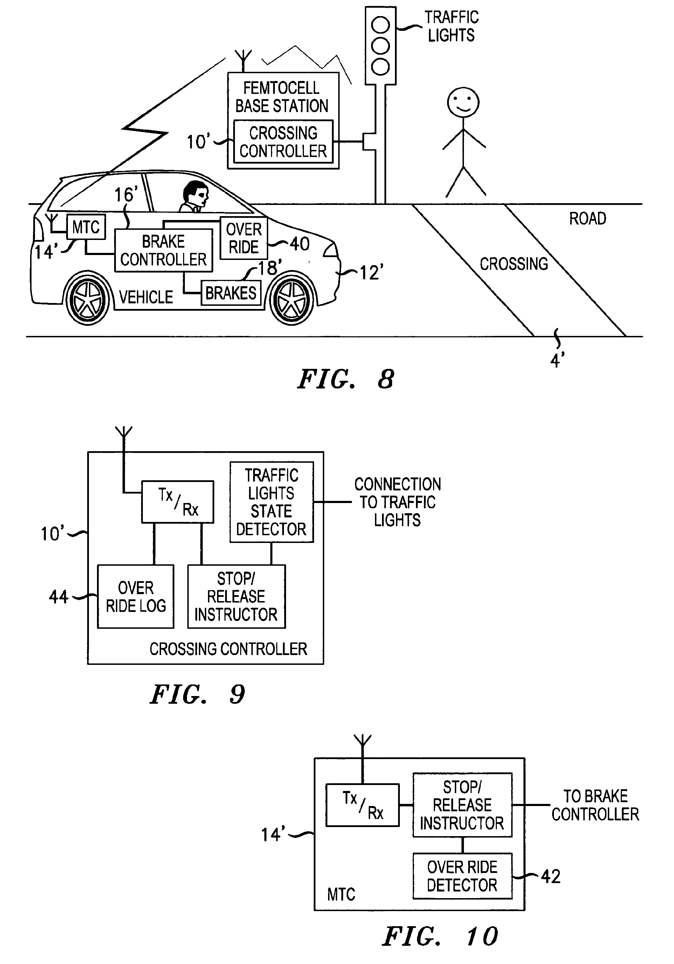

As shown in Figures 8 to 10, another example is similar to the example described with reference to Figure 1 to 7, except that there is no interaction with any pedestrian's user terminal, and the driver of the vehicle can manually override the automatic braking.

Specifically there is an override button 40 in the vehicle 12' that a driver can press on approaching the crossing 4' to avoid the brake controller 16' from causing the brakes 18' to be applied automatically.

The MTC device 14' in the vehicle 12' detects the override in an override detector 42 which causes a message to be sent by the MTC device 14' which is detected by the crossing controller 10' and indicates that automatic braking has been overridden.

Statistics are recorded in an override log 44 of the crossing controller 10' about the overrides. Specifically, the identity of the MTC device 14' is recorded together with the date and time of the override. This information is then available for investigations into any incidents at the crossing 4'.

### Railway crossing example

In another example (not shown) the femtocell base station including the crossing controller is deployed at a railway crossing, and road vehicles include MTC devices. As a vehicle approaches the crossing, its MTC device attaches wirelessly to the femtocell, and is then provided by the femtocell base station with an indication of the state of the crossing, namely whether or not a barrier against vehicle traffic has been deployed so the vehicle may not cross.

If it is determined that the barrier is not deployed, the MTC device or femtocell base station releases the wireless link between them and the vehicle may cross as normal. However, if it is determined that the barrier is deployed, the crossing controller causes the vehicle to automatically brake and so halt before the crossing.

Once the train has passed, the barrier is raised and that state of the crossing is determined by the crossing controller. The crossing controller then indicates to the MTC device that the vehicle's brakes may be released and the driver may drive the vehicle onwards through the crossing.

### Railway crossings - other examples

Railway crossings are known to be deployed in rural or isolated areas in many countries, but which do not have associated traffic light systems.

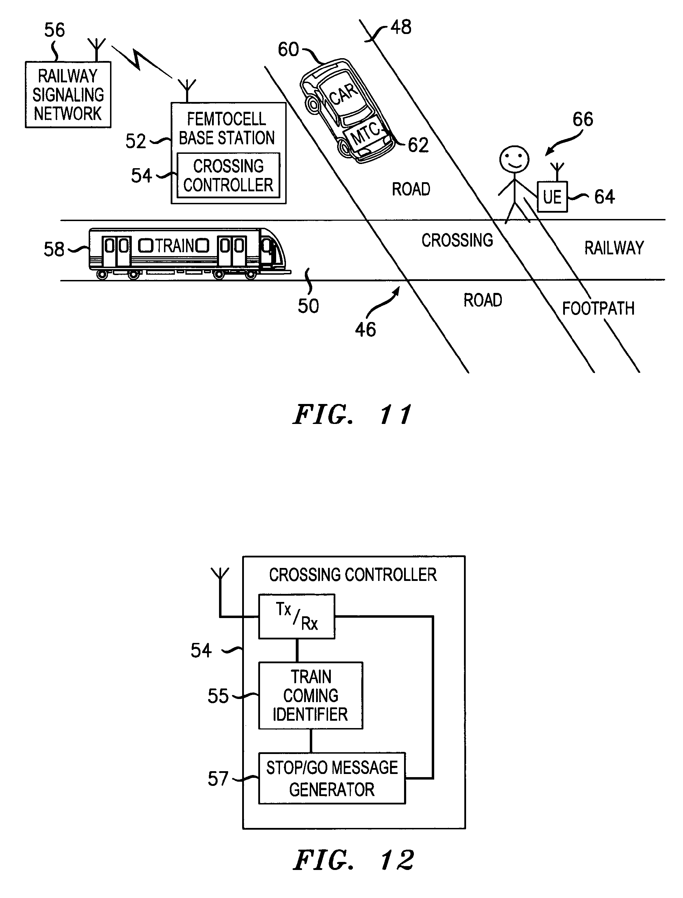

As shown in Figure 11, a railway crossing 46 is provided where a road 48 crosses a railway 50. A femtocell base station 52 is provided at the crossing 46. The femtocell base station 6 includes a vehicle crossing controller 54. As shown in more detail in Figure 12, the crossing controller 54 includes a circuit 55 for identifying that the train is approaching, and a stop/go message generator 57.

As shown in Figure 11, the crossing controller 54 is connected by radio to a railway signalling network 56.

There is a train 58 on the railway 50 and a car 60 on the road 48. The car includes an MTC device 62.

In use, the femtocell base station 52 recognises that the train 58 is approaching the crossing 46 so vehicles and/or pedestrians should be warned or halted. Specifically, the crossing controller 52 identifies in circuit 55 that a train is approaching and so the generator 57 generates a warning indication. Accordingly the femtocell base station 52 issues a warning indication to MTC devices on cars near the crossing 46. In a similar embodiment (not shown), a halt instruction is sent by the femtocell base station to the MTC devices.

In this example, so pedestrians are also warned, the warning indication is also sent to a crossing controller companion application on the user terminals 64 of the or each nearby pedestrian 66 having his/her user terminal 64 connected to the femtocell base station.

It will be understood that these provide an automated system at railway crossings to reduced or prevent accidents. Also, pedestrians in the area may well be encouraged by the provision of the automated system to use the designated crossing, rather than crossing the railway at apparently random points. They may do this as for example the femtocell base station would be recognised as providing wireless coverage to a pedestrian's user terminal so he or she can access the network, for example to check weather forecast, football scores, incoming email, etc.

In a similar embodiment (not shown) to that shown in Figure 11, where traffic light signals are not provided, the femtocell base station provides a definite indication to attached MTC devices and user terminal as to whether or not a train is approaching the crossing. The femtocell base station's indication that a train is not approaching is a positive indication to vehicles and pedestrians that it is safe to cross the railway. In a similar embodiment, the indication includes information as to how far away the next train to approach is. This provides the vehicle driver or pedestrian with information as to how long they have to cross the railway before the femtocell base station will indicate/instruct vehicle drivers and pedestrians to stop at the crossing.

### Another example

Another example system (not shown) is as described with reference to Figures 1 to 7 above in which a vehicle is controlled, except that there is no interaction with a pedestrian's user terminal (if any).

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, bard drives, or optically readable digital data storage media. Some embodiments involve computers programmed to perform said steps of the above-described methods.

## Claims

1. A small cell base station comprising a receiver, a message generator, and a transmitter;
the small cell base station being configured for use near a crossing between one of a railway, road and footpath and another of a railway, road and footpath, in which:
the receiver is configured to receive information regarding which of at least one of a railway vehicle, road vehicle and pedestrian has right of way at the crossing;
the message generator is configured to generate a message indicating which of said at least one of a railway vehicle, road vehicle and pedestrian has right of way;
the transmitter is configured to transmit the message by wireless transmission towards at least one of said at least one of a railway vehicle, road vehicle and pedestrian, upon the said at least one of a railway vehicle, road vehicle and pedestrian entering the small cell radio coverage area.

2. A small cell base station according to claim 1, in which the small cell base station is for use at the crossing which is where a road crosses a footpath, the information comprises crossing traffic signal information, and the message comprises a warning that the pedestrian has right of way or an instruction for the road vehicle to stop.

3. A small cell base station according to claim 1, in which the small cell base station is for use at the crossing which is where a road crosses a footpath, the information comprises crossing traffic signal information, and the message comprises a warning that the pedestrian does not have right of way.

4. A small cell base station according to claim 1, in which the small cell base station is for use at the crossing which is where a railway crosses at least one of a road and a footpath, and the message includes information from a railway signalling network.

5. A small cell base station according to claim 4, in which the message includes information as to the time remaining until the next train approaches the crossing.

6. A crossing comprising a small cell base station according to any preceding claim.

7. A method of using a small cell base station near a crossing between one of a railway, road and footpath and another of a railway, road or footpath, the method comprising:
receiving information regarding which of at least one of a railway vehicle, road vehicle and pedestrian has right of way at the crossing,
generating a message indicating which of said at least one of a railway vehicle, road vehicle and pedestrian has right of way,
transmitting the message by wireless transmission towards at least one of said at least one of a railway vehicle, road vehicle and pedestrian, upon the said at least one of a railway vehicle, road vehicle and pedestrian entering the small cell radio coverage area,
the message being received and decoded by at least one terminal within the small cell area for use in guiding or controlling traffic.

8. A method according to claim 7, in which the at least one terminal comprises a machine type communication, MTC, device which is mounted in the road vehicle, the vehicle having brakes which are selectably automatically applied dependent upon the received and decoded message indicating that a pedestrian or an approaching railway vehicle has right of way,

9. A method according to claim 8, in which a driver of the road vehicle selectably enables or disables the automatic braking.

10. A method according to any of claims 7 to 9, in which the at least one terminal comprises a user terminal carried by the pedestrian, the user terminal being configured to provide alerts to the pedestrian as to whether or not it is safe to now cross.

11. A. vehicle braking circuit comprising a machine type communication, MTC, device, a detector, a brake controller and a brake, the MTC device being configured to receive over air a wireless signal indicating that the vehicle should stop,
the detector being configured to detect the indication to stop and to inform a brake controller of the indication,
the brake controller being configured to apply the brake automatically dependent upon being informed of the indication.

12. A vehicle braking circuit according to claim 11, including a driver input which enables temporary disablement by the driver of automatic braking.

13. A vehicle braking circuit according to claim 12, in which the MTC device is configured to transmit a reply towards the small cell base station indicating that the disablement of automatic braking by driver input has been made.

14. A vehicle comprising a vehicle braking circuit according to any of claims 11 to 13.

15. A computer program product operable when executed on a computer to perform the method of any of claims 7 to 10.
